# DEMANDE DE BREVET EUROPEEN

(11) **EP 3 822 494 A1**
(43) Date de publication de la demande: **19.05.2021**
(21) Numéro de dépôt: 19208899.5
(22) Date de dépôt: 13.11.2019
(51) Int. Cl.: F16B 5/02, G04B 19/04, G04B 19/14, G04B 19/20

(54) **ORGANE ET DISPOSITIF DE FIXATION D'UN DISQUE**

(71) Demandeur: ETA SA Manufacture Horlogère Suisse, 2540 Grenchen (CH)
(72) Inventeur: MOUCHE, Laurent, 2714 Les Genevez (CH); LAGORGETTE, Pascal, 2502 Bienne (CH); BALMER, Raphaël, 2824 Vicques (CH)
(74) Mandataire: ICB SA

(57) **Abrégé**

La présente invention concerne, entre autre, un procédé de fixation (500) pour fixer au moins un élément d'affichage (210) d'une montre à l'aide d'un dispositif de fixation (200).
En effet, ledit au moins un élément d'affichage (210) est fixé grâce audit procédé de fixation (500) via ledit dispositif de fixation (200). Pour cela il convient de fournir ledit au moins un élément d'affichage (210), au moins un mouvement (220) et au moins un organe de fixation (100), ensuite de déformer ledit au moins un organe de fixation (100) de sorte à s'adapter audit au moins un élément d'affichage (210) avant de fixer ledit au moins un organe de fixation (100) avec ledit au moins un élément d'affichage (210) audit au moins un mouvement (220).

## Description

### Domaine technique

Le domaine technique de la présente invention concerne les dispositifs de fixation de disque et en particulier d'un disque de quantième.

### Arrière-plan technologique

Certains éléments d'affichages sont réalisés dans des matériaux précieux avec des tolérances qui sont inhérentes au processus de fabrication, et ils sont fixés sur des mouvements, qui sont réalisés dans d'autres matériaux avec d'autres processus qui possèdent également leurs propres tolérances.

Dès lors, un ajustement est nécessaire afin que les deux pièces puissent être assemblées, ce qui exige beaucoup de précisions est parfois, les pièces qui ne conviennent pas sont mis au rebut.

### Résumé de l'invention

Par conséquent, la présente invention se propose de résoudre totalement ou partiellement les inconvénients cités ci-avant par l'intermédiaire d'un organe de fixation pour fixer au moins un élément d'affichage d'une montre, configuré pour afficher au moins une information, sur au moins un mouvement d'une montre, ledit organe de fixation étant configuré pour se déformer et pour s'adapter audit au moins un élément d'affichage de sorte à fixer ledit au moins un élément d'affichage audit au moins un mouvement.

Grâce à cette disposition, les tolérances qui peuvent apparaître lors des procédés de fabrication des pièces, et en particulier d'un élément d'affichage et d'un mouvement sont rattrapées par ledit organe de fixation.

Selon un mode de réalisation, ledit organe de fixation comprend au moins une portion rigide et au moins une portion de déformation : ladite au moins une portion de déformation étant configurée pour être plus facilement déformable que ladite au moins une portion rigide.

Grâce à cette disposition, ledit organe de fixation peut s'adapter au contour dudit au moins un élément d'affichage.

Selon un mode de réalisation, ledit organe de fixation comprend un épaulement ou une gorge : ledit épaulement ou ladite gorge forme un logement configuré pour recevoir ledit au moins un élément d'affichage.

Grâce à cette disposition, ledit au moins un élément d'affichage peut être logé et/ou maintenu par ledit organe de fixation.

Selon un mode de réalisation, ledit organe de fixation présente une forme d'anneau fendu et/ou de clip.

Grâce à cette disposition, ledit organe de fixation peut être déformé dans un plan.

La présente invention concerne un dispositif de fixation pour au moins un élément d'affichage d'une montre, le dispositif de fixation comprenant au moins un élément d'affichage, au moins un mouvement et au moins un organe de fixation selon l'une quelconque des revendications précédentes.

Grâce à cette disposition, les tolérances qui peuvent apparaître lors des procédés de fabrication des pièces, et en particulier d'un élément d'affichage et d'un mouvement sont rattrapées par ledit organe de fixation.

La présente invention concerne un procédé de fixation pour au moins un élément d'affichage d'une montre via ledit dispositif de fixation selon l'une des revendications précédentes, ledit procédé de fixation comprenant au moins une étape de :
- Fourniture dudit au moins un élément d'affichage, dudit au moins un mouvement et dudit au moins un organe de fixation ;
- Déformation dudit au moins un organe de fixation de sorte à s'adapter audit au moins un élément d'affichage ; et
- Fixation dudit au moins un organe de fixation audit au moins un mouvement.

Grâce à cette disposition, les tolérances qui peuvent apparaître lors des procédés de fabrication des pièces, et en particulier d'un élément d'affichage et d'un mouvement sont rattrapées par ledit organe de fixation.

Selon un mode de réalisation, lors de l'étape de déformation dudit au moins un organe de fixation, ledit au moins un élément d'affichage est logé dans ledit logement dudit épaulement ou de ladite gorge.

Grâce à cette étape, ledit au moins un élément d'affichage peut être logé et/ou maintenu par ledit organe de fixation.

Selon un mode de réalisation, lors de l'étape de déformation, ledit au moins un organe de fixation se déforme au niveau de ladite au moins une portion de déformation.

Grâce à cette disposition, ledit organe de fixation peut s'adapter au contour dudit au moins un élément d'affichage.

Les modes de réalisation et les variantes mentionnés ci-avant peuvent être pris isolément ou selon toute combinaison techniquement possible.

La présente invention sera bien comprise et ses avantages ressortiront aussi à la lumière de la description qui va suivre, donnée uniquement à titre d'exemple non limitatif et faite en référence aux figures annexées, dans lesquelles des signes de références identiques correspondent à des éléments structurellement et/ou fonctionnellement identiques ou similaires.

### Brève description des figures

L'invention sera décrite ci-après de manière plus détaillée à l'aide des dessins annexés, donnés à titre d'exemples nullement limitatifs, dans lesquels :

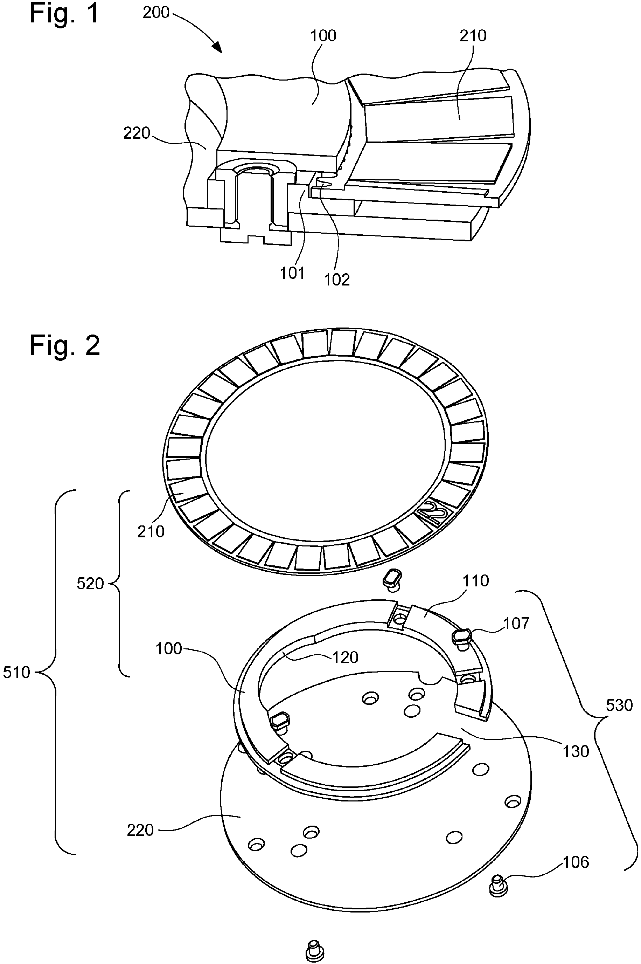

- La figure 1 représente une vue en coupe d'un dispositif de fixation **200** selon un mode de réalisation ; et,
- La figure 2 illustre un procédé de fixation de l'organe de fixation **100** de sorte à former ledit dispositif de fixation **200.**

### Description détaillée de l'invention

Lors de la fabrication de certaines pièces d'horlogerie, certaines tolérances peuvent apparaître et cela est notamment le cas des éléments d'affichage, par exemple les quantièmes du mois ou autres, et des mouvements.

À cet effet, il est prévu au moins un organe de fixation **100,** qui permet d'assembler au moins un élément d'affichage **210** sur au moins un mouvement **220** grâce à un procédé de fixation **500** décrit ci-après.

Pour ce faire, il convient de disposer dudit au moins un élément d'affichage **210,** dudit au moins un mouvement **220** et dudit au moins un organe de fixation **100,** qui ont été fournis **510** au préalable.

Le disque de quantième **210,** c'est-à-dire ledit élément d'affichage **210** est inséré dans ledit au moins un organe de fixation **100** en déformant **520** ledit au moins un organe de fixation **100** de sorte à s'adapter audit au moins un élément d'affichage **210.**

En effet, ledit organe de fixation **100** comprend au moins une portion rigide **110** et au moins une portion de déformation **120,** qui permet à ladite au moins une portion de déformation **120** d'être plus facilement déformable que ladite au moins une portion rigide **110** de sorte à s'adapter au contour dudit au moins un élément d'affichage **210.**

Par ailleurs, ledit au moins un organe de fixation **100** se présente ou présente une forme d'anneau fendu et/ou de clip. Cette forme d'anneau fendu et/ou de clip présente une discontinuité **130** ou une ouverture **130,** ce qui permet en rapprochant les deux extrémités dudit au moins un organe de fixation **100** et donc d'être déformé dans un plan puisque cette déformation **520** est localisée au niveau de ladite au moins une portion de déformation **120** dudit au moins un organe de fixation **100.**

Cela est très avantageuse puisque comme ledit organe de fixation **100** comprend un épaulement **101** ou une gorge **101** qui forme un logement **102** pour recevoir ledit au moins un élément d'affichage **210,** et donc cette déformation dans un plan permet d'insérer ou de loger ledit au moins un élément d'affichage **210** dans ledit organe de fixation **100.**

S'ensuit, la fixation **530** dudit au moins un organe de fixation **100** avec ledit au moins un élément d'affichage **210** audit au moins un mouvement **220** via des vis **106** et le cas échant de pieds de vis **107** afin de former un dispositif de fixation **200** comprenant ledit au moins un élément d'affichage **210,** ledit au moins un mouvement **220** et ledit au moins un organe de fixation **100** de sorte à éliminer les tolérances qui peuvent apparaître lors des procédés de fabrication des pièces, et en particulier d'un élément d'affichage **210** et d'un mouvement **220.**

Il convient de rajouter que ledit au moins un organe de fixation **100** peut être peu précis, plus exactement, le contour dudit au moins un organe de fixation **100** comprenant ledit épaulement **101** ou ladite gorge **101** peut comprendre une plus grande tolérance par rapport au diamètre dudit au moins un élément d'affichage **210.** Cette tolérance est dû grâce à ladite discontinuité **130** ou ladite ouverture **130** dudit au moins un organe de fixation **100** et au tolérances de la matière plastique que compose ledit au moins un organe de fixation **100,** et bien naturellement c'est en fixant ledit au moins un organe de fixation **100** sur ledit au moins un mouvement **220** que ledit dispositif de fixation **200** est formé et que l'ensemble comprenant ledit au moins un organe de fixation **100** et ledit au moins un élément d'affichage **210** devient plus précis.

## Revendications

1. Organe de fixation (100) pour fixer au moins un élément d'affichage (210) d'une montre, configuré pour afficher au moins une information, sur au moins un mouvement (220) d'une montre, ledit organe de fixation (100) étant configuré pour se déformer et pour s'adapter audit au moins un élément d'affichage (210) de sorte à fixer ledit au moins un élément d'affichage (210) audit au moins un mouvement (220).

2. Organe de fixation (100) selon la revendication 1, lequel comprend au moins une portion rigide et au moins une portion de déformation (120) ; ladite au moins une portion de déformation (120) étant configurée pour être plus facilement déformable que ladite au moins une portion rigide.

3. Organe de fixation (100) selon la revendication 1 ou 2, lequel comprend un épaulement (101) ou une gorge (101); ledit épaulement (101) ou ladite gorge (101) forme un logement (102) configuré pour recevoir ledit élément d'affichage (210).

4. Organe de fixation (100) selon l'une quelconque des revendications précédentes, lequel présente une forme d'anneau fendu et/ou de clip.

5. Dispositif de fixation (200) pour au moins un élément d'affichage (210) d'une montre, ledit dispositif de fixation (200) comprenant au moins un élément d'affichage (210), au moins un mouvement (220) et au moins un organe de fixation (100) selon l'une quelconque des revendications précédentes.

6. Procédé de fixation (500) pour au moins un élément d'affichage (210) d'une montre via ledit dispositif de fixation (200) selon l'une des revendications précédentes, ledit procédé de fixation (500) comprenant au moins une étape de :
- Fourniture (510) dudit au moins un élément d'affichage (210), dudit au moins un mouvement (220) et dudit au moins un organe de fixation (100) ;
- Déformation (520) dudit au moins un organe de fixation (100) de sorte à s'adapter audit au moins un élément d'affichage (210) ; et
- Fixation (530) dudit au moins un organe de fixation (100) audit au moins un mouvement (220).

7. Procédé de fixation (500) selon la revendication 6, dans lequel lors de l'étape de déformation (520) dudit au moins un organe de fixation (100), ledit au moins un élément d'affichage (210) est logé dans ledit logement (102) dudit épaulement (101) ou de ladite gorge (101).

8. Procédé de fixation (500) selon la revendication 6 ou 7, dans lequel, lors de l'étape de déformation (520), ledit au moins un organe de fixation (100) se déforme au niveau de ladite au moins une portion de déformation (520).
